# EUROPÄISCHE PATENTANMELDUNG

(11) **EP 1 672 115 A1**
(43) Veröffentlichungstag der Anmeldung: **21.06.2006**
(21) Anmeldenummer: 05027176.6
(22) Anmeldetag: 13.12.2005
(51) Int. Cl.: D06G 1/00, B65G 19/02

(54) **Vorrichtung zur Reinigung einer Matratze**

(30) Priorität: 14.12.2004 DE 102004060384
(71) Anmelder: MATRIX GmbH, 76185 Karlsruhe (DE)
(72) Erfinder:
(74) Vertreter: Petersen, Frank

(57) **Zusammenfassung**

Die Erfindung betrifft eine Vorrichtung zum Reinigen einer Matratze, bei der wenigstens ein Transportelement (5) vorhanden ist, mit dem eine Matratze (1) mit einer im Wesentlichen vertikalen Ausrichtung ihrer Liegeflächen transportiert wird.

Um zu verhindern, dass bei einem derartigen Transport die Matratze an ihrer untenliegenden Kante beschädigt wird, wird vorgeschlagen, die Matratze hängend zu transportieren und somit die Reinigungsvorrichtung mit wenigstens einem Matratzenaufhängelement (5,12,14,15,16,18) zu versehen. Dieses greift insbesondere mit einer Klemmvorrichtung (8,9,10) benachbart zum oberen Matratzenrand an den Liegeflächen einer Matratze an oder aber an Schlaufen (11), die an diesem Matratzenrand vorhanden sind. Auch eine spezielle dort vorhandene Arretiervorrichtung (16) kann vorgesehen sein.

## Beschreibung

Die Erfindung betrifft eine Vorrichtung zum Reinigen einer Matratze, bei der wenigstens ein Transportelement vorhanden ist, mit dem eine Matratze mit einer im Wesentlichen vertikalen Ausrichtung ihrer Liegeflächen transportiert wird.

In zunehmendem Maße leiden Allergiker heute unter Hausstaub. Es ist dabei bekannt, dass derartiger Hausstaub insbesondere durch die Ausscheidungen von Hausstaubmilben allergen wird, die z. B. in Matratzen zu finden sind, wo sie sich von Hautschuppen etc. ernähren. Um diese Hausstaubmilben zu beseitigen, sind bereits verschiedene Möglichkeiten vorgeschlagen worden. Insbesondere gibt es dabei Vorschläge, Matratzen entsprechend zu reinigen, wobei die Matratzen in entsprechende Reinigungsmaschinen eingebracht werden müssen.

Auch im Krankenhausbereich ist es bekannt, Matratzen etc. in großen Dampfsterilisier- und Desinfektionskammern zu behandeln.

Häufig ist eine derartige Reinigung mehrstufig und umfasst mehrere aufeinanderfolgende Arbeitsschritte wie Absaugen, Sterilisieren, Trocknen etc. Um diese Arbeitsschritte zeitsparend durchführen zu können, ist es bekannt, eine Matratze mit einer im Wesentlichen vertikalen Ausrichtung ihrer Liegefläche in bzw. durch eine entsprechende Matratzenreinigungsanlage zu transportieren und die beiden Liegeflächen im Wesentlichen zeitgleich zu bearbeiten. Eine wie oben angegebene Vorrichtung hierfür ist beispielsweise bekannt aus der DE-C-37 29 608.

In dieser Druckschrift wird vorgeschlagen, Matratzen auf eine ihrer seitlichen Schmalkanten zu stellen und sie dann auf dieser Schmalkante stehend mittels Mitnehmern durch eine Reinigungsanlage zu führen.

Nachteilig hierbei ist insbesondere, dass auf diese Weise die unten liegende Schmalkante der Matratze einer hohen mechanischen Belastung unterliegt durch an ihr angreifende Reib- und/oder Rollkräfte. Dies kann zu einer unerwünschten Beschädigung der Matratze führen.

Des Weiteren weisen heutige Matratzen an ihren genannten Schmalkanten oft auch Schlaufen, Laschen etc. auf, die für eine leichtere Handhabbarkeit der Matratze beim Drehen oder Wenden in einem Bett vorgesehen sind. Diese Schlaufen oder Laschen können sich auch leicht beim Transport der derart, wie beschrieben im Wesentlichen vertikal ausgerichteten Matratze durch eine Reinigungsanlage an die Matratzenschmalkante von unten stützenden Elementen der Reinigungsanlage verhaken, was dann ebenfalls zu Beschädigungen der Matratze führt.

Aufgabe der vorliegenden Erfindung ist es daher, eine entsprechende Reinigungsvorrichtung für Matratzen anzugeben, bei der die genannten Nachteile nicht auftreten.

Diese Aufgabe wird erfindungsgemäß dadurch gelöst, dass das Transportelement, mit dem eine Matratze zum Reinigen in oder durch die entsprechende Reinigungsvorrichtung transportiert wird, mit wenigstens einem Matratzenaufhängeelement versehen ist.

Die Erfindung hat somit den Vorteil, dass mit ihr eine Matratze in hängender Weise zu transportieren ist und somit ihre unten liegende Schmalkante keiner Friktion o. ä. ausgesetzt ist. Diese unten liegende Schmalkante wird somit weniger belastet und ein Beschädigungsrisiko wird so verringert.

Auch können dabei an der unten liegenden Schmalkante der Matratze befindliche Schlaufen etc. sich nicht in Elementen der Reinigungsvorrichtung verfangen, so dass hierdurch auch eine Verbesserung der Betriebssicherheit erreicht wird.

Bei einer Weiterbildung der Erfindung ist das Matratzenaufhängeelement mit einer Klemmvorrichtung versehen, die benachbart zum oberen Matratzenrand an den Liegeflächen einer Matratze angreift.

Mit einem derartigen Aufhängeelement können Matratzen unterschiedlichster Art gehaltert und in eine Reinigungsvorrichtung verbracht werden.

Bei einer besonders bevorzugten Ausführungsform dieser Variante ist die Klemmvorrichtung dabei mit einem Scherenmechanismus versehen, der durch die Gewichtskraft der Matratze in einer die Klemmvorrichtung schließenden Weise betätigt wird. Hierdurch ist zu erreichen, dass insbesondere auch schwerere Matratzen sicher gehalten werden und so verhindert wird, dass diese eventuell aus dem Matratzenaufhängelement herausfallen und damit eine Betriebsstörung verursachen.

Eine andere bevorzugte Ausführungsform des Matratzenaufhängelementes ist mit einem Haken versehen, der mit einer an der Schmalseite der Matratze vorhandenen Schlaufe korrespondiert.

Wie bereits oben erwähnt, sind derartige Schlaufen bei Matratzen häufig vorgesehen, um deren Handhabbarkeit beim Drehen oder Wenden in einem Bett zu erleichtern.

Bei der hier jetzt vorgeschlagenen Ausführungsform werden diese Schlaufen benutzt, um die Matratze an dem Matratzenaufhängeelement zu befestigen.

Bei einer besonders bevorzugten Ausführungsform ist der vorgesehene Haken nach unten geschlossen und weist an einem Ende eine Abrutschsicherung auf. Hierdurch ist eine besonders sichere Halterung gewährleistet.

Insbesondere kann eine derartige Abrutschsicherung durch einen nach oben gerichteten Abschnitt des Hakens gebildet sein.

Es ist aber auch möglich, die Abrutschsicherung am offenen Ende des Hakens durch eine entsprechendes Sperrelement auszubilden, das umklapp- und arretierbar ist, um so ein unbeabsichtigtes Zurückrutschen der Matratze vom Mat- ratzenaufhängeelement zu verhindern.

Grundsätzlich ist es allerdings auch im Sinne der Erfindung, wenn das Matratzenaufhängeelement zwei aufeinander zu gerichtete Hakenelemente aufweist, die eventuell auch mit ihren unten liegenden Abschnitten übereinandergefahren werden können, um so eine geschlossene Öse zu bilden, in der die an der Matratze vorhandene Schlaufe gehaltert wird.

Bei einer besonders bevorzugten Ausführungsform ist ein Matratzenaufhängeelement mit einem Arretierelement versehen, das mit einem Gegenelement an einer Matratze zusammenwirkt. Bei diesem Gegenelement handelt es sich um ein speziell in die Matratzenschmalkante eingearbeitete Halterung, die mit einem genau passenden Arretierelement an dem Matratzenaufhängeelement zusammenwirkt. Hierdurch kann eine schnelle Verbindung erreicht werden, indem das Arretierelement wie ein Schlüssel in das an der Matratze befindliche Gegenelement eingreift und dort die notwendige Haltekraft aufbringt.

Weitere Vorteile und Merkmale der Erfindung ergeben sich aus der nachfolgenden Beschreibung von Ausführungsbeispielen. Dabei zeigt
- Figur 1: eine Vorrichtung zum senkrechten Halten einer Matratze mit einer Klemmvorrichtung;
- Figur 2: eine Vorrichtung zum senkrechten Halten einer Matratze mit einem Haken;
- Figur 3: einen Haken gemäß Figur 2 in der Seitenansicht;
- Figur 4: eine alternative Ausführungsform einer Halterung mittels Haken;
- Figur 5: eine Vorrichtung zum senkrechten Halten einer Matratze mit einem Arretierelement und einem Gegenelement an einer Matratze.

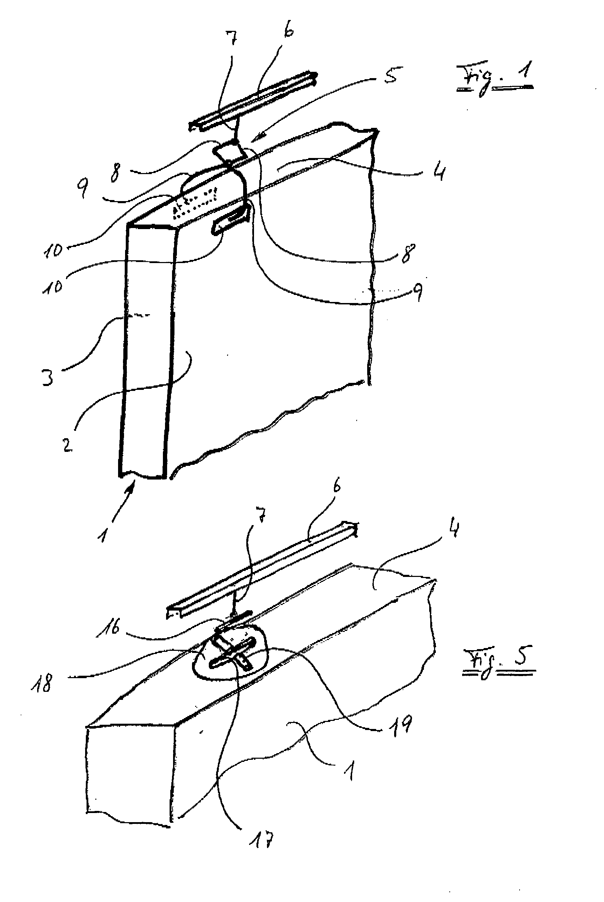

In der Figur 1 erkennt man als Prinzipskizze eine Vorrichtung zum hängenden Transport einer Matratze 1. Diese hat zwei Liegeflächen 2, 3, die im hier dargestellten Beispiel vertikal ausgerichtet sind, so dass die normalerweise seitlich der Matratze befindliche Schmalkante 4 im hier dargestellten Beispiel oben liegt.

Die hier dargestellte Matratze 1 wird über ein Matratzenaufhängeelement 5 an einem Transportelement 6 gehaltert. Im vorliegenden Beispiel handelt es sich bei dem Transportelement 6 um eine im Querschnitt C-förmige, nach unten offene Schiene. In dieser ist eine Aufhängung 7 befestigt, die entweder zusammen mit dem Transportelement 6 oder aber entlang diesem bewegt werden kann.

Am unteren Ende der Aufhängung 7 befinden sich zwei Haltestangen 8, die an ihrem oberen Ende schwenkbar mit der Aufhängung 7 und an ihren unteren Enden mit sich gegenüberliegenden Enden von zwei sich kreuzenden Scherenarmen 9 verbunden sind. Die Scherenarme 9 tragen an ihren anderen Enden jeweils Greifplatten 10, die sich wiederum gegenüberliegen und sich bei einer Bewegung der Scherenarme 9 aufeinander zu und voneinander weg bewegen.

Die Greifplatten 10 bilden zusammen mit den Scherenarmen 9 und den Haltestangen 8 eine Klemmvorrichtung: indem die Greifplatten 10 an die Liegeflächen 2 bzw. 3 der Matratze 1 angelegt werden, entsteht hier eine Reibung. indem dann die Matratze 1 mit ihrem Gewicht an den Greifplatten 10 zieht, werden diese durch die Scherenarme 9 und die Haltestangen 8, die an der Aufhängung 7 angelenkt sind, zusammengedrückt, womit die Matratze 1 auf sichere Weise an dem Transportelement 6 hängt. Bei schweren Matratzen wird die von den Greifplatten aufgebrachte Kraft stärker sein als bei leichteren Matratzen. Somit ist eine automatische Anpassung der zwischen den Klemmplatten 10 wirkenden Klemmkraft an das Gewicht der Matratze 1 zu erreichen.

Außer der hier am "Kopfende" der Matratze dargestellten Halterung ist eine weitere gleichartige Halterung am hier nicht dargestellten "Fußende" der Matratze vorgesehen, die ebenfalls an dem Transportelement 6 befestigt ist. Damit kann mittels des Transportelementes 6 die Matratze 1 ohne weiteres in eine Reinigungsanlage hinein- oder aber auch herausbewegt werden.

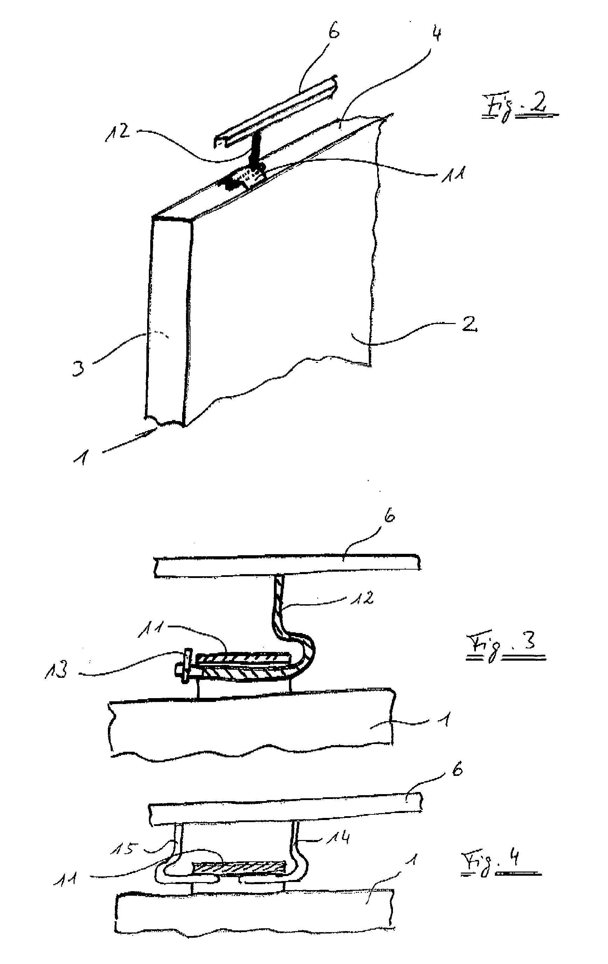

Eine alternative Ausführungsform einer Halterung ist in der Figur 2 dargestellt. Auch hier erkennt man eine Matratze 1, die zwei Liegeflächen 2, 3 hat, Bei der hier dargestellten Matratze ist an deren Schmalkante 4 in bekannter Weise eine Schlaufe 11 eingearbeitet- Diese Schlaufen sind bei Matratzen üblicherweise vorhanden, um ein besseres Drehen bzw. Wenden der Matratze in einem Bett zu ermöglichen. Sie werden üblicherweise an der Nahtstelle zwischen Liegefläche und Schmalkante der Matratze mit eingenäht

Im hier dargestellten Beispiel ist an dem Transportelement 6 ein Haken 12 als Matratzenaufhängeelement vorgesehen, der mit der Schlaufe 11 korrespondiert und sie im hier dargestellten Beispiel untergreift.

In der Figur 3 ist dies im Schnitt dargestellt.

Man erkennt, dass sich von dem Transportelement 6 der Haken 12 nach unten erstreckt und die an der Matratze 1 festgenähte Schlaufe 11 mit einem sich anschließenden quer erstreckenden Abschnitt untergreift. An seinem dem Transportelement 6 abgewandten Ende ist der Haken 12 außerdem noch mit einer Abrutschsicherung 13 versehen, die verhindert, dass die Schlaufe 11 unbeabsichtigt von dem Haken 12 abrutscht.

Es ist einerseits möglich, diese Abrutschsicherung als festen nach oben gerichteten Abschnitt am Haken 12 vorzusehen. Im hier dargestellten Beispiel ist die Abrutschsicherung allerdings klappbar ausgebildet, so dass eine Handhabung der Matratze erleichtert wird sowohl beim Aufhängen als auch beim Abhängen, wenn diese Abrutschsicherung umgeklappt wird und ein leichtes Aufnehmen bzw. Abnehmen der Matratze ermöglicht wird.

Eine alternative Ausführungsform hierzu ist in der Figur 3 dargestellt. Dort sind an dem Transportelement 6 zwei sich gegenüberliegende Haken 14, 15 als Matratzenaufhängeelement vorgesehen, die die Schlaufe 11, die an der Matratze 1 befestigt ist, jeweils aus entgegengesetzten Richtungen in etwa halb untergreifen.

Der Abstand zwischen den Haken 14, 15 kann entweder verstellbar sein oder aber fest. Im ersten Fall lassen sich die Haken 14, 15 z. B. durch ein Verschieben entlang des Transportelementes 6 damit auf die Breite der Schlaufe 11 einstellen, während im zweiten Fall die Schlaufe 11 durch die Lücke zwischen den Haken 14, 15 hindurchgefädelt werden muss und sich dann selbsttätig über diese Lücke legt, wodurch ein unbeabsichtigtes Herausrutschen aus diesem Matratzenaufhängeelement verhindert wird.

Auch hier sei noch einmal erwähnt, dass außer dem dargestellten jeweils einen Matratzenaufhängeelement am Transportelement 6 ein entsprechendes zweites Matratzenaufhängeelement vorgesehen sein kann, um mehrere seitlich an einer Matratze vorhandene Schlaufen entsprechend er- bzw. untergreifen zu können. Hierdurch wird die Handhabung von Matratzen innerhalb einer Reinigungsvorrichtung erheblich besser.

Weiterhin wird noch eine Ausführungsform beschrieben, wie sie in der Figur 5 beispielhaft dargestellt ist.

Bei dieser Ausführungsform ist das Matratzenaufhängelement mit einem Arretierelement 16 versehen, das mit einem Gegenelement 18 an einer Matratze 1 zusammenwirkt.

In dem hier dargestellten Beispiel befindet sich an dem Transportelement 6 über eine bereits bekannte Aufhängung 7 eine Arretierstange 16, die als Arretierelement fungiert. Diese Arretierstange 16 ist in den Längsschlitz 17 eines Gegenelementes 18 einzuführen und in diesem dann um etwa 90° zu verdrehen, so dass sie in einer Aufnahme 19 des Gegenelementes 18 zu liegen kommt und sich dort verhakt.

Dies ist eine besonders sichere Weise, eine Matratze in hängender Weise mit dem Transportelement 6 zu verbinden, wobei für das hier beschriebene Arretierelement mit dem entsprechenden Gegenelement ausdrücklich die Beispielhaftigkeit der Ausführungsform noch einmal erwähnt werden soll. Auch andere Arretier- und Gegenelemente, die wie Bajonettverschlüsse funktionieren, liegen im Umfang der hier vorliegenden Erfindung. Bei solchen können die Gegenelemente nicht nur wie hier dargestellt in die Schmalkante 4 der Matratze 1 integriert sein, sondern es besteht auch die Möglichkeit, ein solches Gegenelement in eine Schlaufe zu integrieren, wie sie oben bereits beschrieben wurde.

Mit allen dargestellten Ausführungsbeispielen lassen sich Matratzen in einer hängenden Weise durch eine Reinigungsvorrichtung bewegen, ohne dass die Gefahr besteht, dass die Matratzen an ihrer der Seitenkante 4 gegenüberliegenden Unterkante beschädigt werden aufgrund von Reibung oder Hängenbleiben an Bauelementen innerhalb der Reinigungsvorrichtung.

## Patentansprüche

1. Vorrichtung zum Reinigen einer Matratze (1), bei der wenigstens ein Transportelement (5) vorhanden ist, mit dem eine Matratze (1) mit einer im Wesentlichen vertikalen Ausrichtung ihrer Liegeflächen (2, 3) transportiert wird,
**dadurch gekennzeichnet,**
**dass** das Transportelement (6) mit wenigstens einem Matratzenaufhängelement (5; 12; 14, 15; 16, 18) versehen ist.

2. Vorrichtung gemäß Anspruch 1,
**dadurch gekennzeichnet,**
**dass** das Matratzenaufhängeelement (5) eine Klemmvorrichtung (8, 9, 10) enthält, die benachbart zum oberen Matratzenrand an den Liegeflächen (2, 3) einer Matratze angreift.

3. Vorrichtung gemäß Anspruch 2,
**dadurch gekennzeichnet,**
**dass** die Klemmvorrichtung (8, 9, 10) einen Scherenmechanismus (8, 9) aufweist, der durch die Gewichtskraft der Matratze (1) in einer die Klemmvorrichtung (8, 9, 10) schließenden Weise betätigt wird.

4. Vorrichtung gemäß Anspruch 1,
**dadurch gekennzeichnet,**
**dass** das Matratzenaufhängeelement wenigstens einen Haken (12; 14, 15) aufweist, der mit einer an der Schmalkante (4) der Matratze (1) vorhandenen Schlaufe (11) korrespondiert.

5. Vorrichtung gemäß Anspruch 4,
**dadurch gekennzeichnet,**
**dass** der Haken (12) nach unten geschlossen ist und an einem Ende eine Abrutschsicherung (13) aufweist.

6. Vorrichtung gemäß Anspruch 6,
**dadurch gekennzeichnet,**
**dass** die Abrutschsicherung (13) durch einen nach oben gerichteten Abschnitt des Hakens (12) gebildet ist.

7. Vorrichtung gemäß Anspruch 6,
**dadurch gekennzeichnet,**
**dass** die Abrutschsicherung (13) klapp- und arretierbar ist.

8. Vorrichtung gemäß Anspruch 1,
**dadurch gekennzeichnet,**
**dass** das Matratzenaufhängeelement mit einem Arretierelement (16) versehen ist, das mit einem Gegenelement (18) an einer Matratze (1) zusammenwirkt.
